Europäisches Patentamt

(19) European Patent Office

Office européen des brevets

(11) Publication number: **0 114 478**
**B1**

(12) **EUROPEAN PATENT SPECIFICATION**

(45) Date of publication of patent specification: **06.05.87**

(21) Application number: **83307603.7**

(22) Date of filing: **14.12.83**

(51) Int. Cl.⁴: **C 08 F 220/04, C 09 D 3/74**

(54) **Water-swellable cross-linked polymeric microgel particles and aqueous dispersions of organic film-forming resins containing the same.**

(30) Priority: **16.12.82 US 449887**

(43) Date of publication of application:
**01.08.84 Bulletin 84/31**

(45) Publication of the grant of the patent:
**06.05.87 Bulletin 87/19**

(84) Designated Contracting States:
**BE CH DE FR GB LI NL**

(56) References cited:
**EP-A-0 034 913**
**GB-A- 967 051**

(73) Proprietor: **CELANESE CORPORATION**
**1211 Avenue of the Americas**
**New York New York 10036 (US)**

(72) Inventor: **Gajria, Chandrasen**
**84 Cushing Street**
**Hingham, MA 02043 (US)**
Inventor: **Ozari, Yehuda**
**1754 Orangewood Lane**
**Arcadia, CA (US)**

(74) Representative: **De Minvielle-Devaux, Ian Benedict Peter et al**
**CARPMAELS & RANSFORD 43, Bloomsbury Square**
**London WC1A 2RA (GB)**

Courier Press, Leamington Spa, England.

## Description

The present invention relates generally to certain polymeric microgel particles and to thermosetting coating compositions containing such microgel particles which are useful for coating substrates such as metal surfaces.

In the manufacture of metal containers, for example, aluminium or steel food and beverage containers, a thin protective coating of a thermoset film may be applied to the interior of the container in order to prevent contact of the interior of the container with its contents. Such coatings ideally should exhibit good adhesion to the interior metal surface of the container, especially when the contents of the container are acidic in nature, good stain resistance, a low content of extractables, to prevent contamination of the container contents, and a rapid cure rate, for economy of container manufacture. Typical synthetic resins which have been utilised in such coatings include, for example, the heat-curable vinyl, butadiene, epoxy, phenolic, alkyl/aminoplast and oleoresinous based polymers.

In one common method of application, coatings of the aforementioned resins have been applied to the metallic interior of the containers in the form of a solution or dispersion of the heat-curable resin in a volatile organic solvent. Coatings formulated in this manner have in practice proven less than desirable since, during the drying and curing stages of the coating operation, vaporisation of the solvent leads to significant work place pollution problems which have necessitated the use of costly solvent recovery procedures in order to comply with governmental safety and pollution regulations.

Various methods have been proposed to avoid the use of organic solvents in preparing synthetic resin coatings for metal surfaces. One such method is to formulate the coating as an aqueous dispersion.

In our U.S. Patent No. 4,289,811, for example, there are described thermosettable coating compositions useful for coating metal surfaces such as cans which comprise an aqueous dispersion of a heat-curable epoxy resin, an aminoplast resin and an acrylic type interpolymer comprising the polymerisation product of 20 to 90 weight percent of a polymerisable $\alpha,\beta$-ethylenically unsaturated carboxylic acid monomer and 10 to 80 weight percent of one or more polymerisable carboxyl-free vinyl monomers. The aqueous dispersions of that Patent are prepared by dissolving the aminoplast resin in a water-miscible organic solvent, adding the aforementioned monomers to the solution and then heating the solution to form a polymerisation product solution containing the aminoplast resin and the acrylic type interpolymer; admixing the resulting solution with the epoxy resin, neutralising the admixture with ammonia or an organic amine and then dispersing the admixture into an aqueous medium to form an aqueous dispersion having a solids content of 15 to 40 weight percent.

U.S. Patent No. 3,908,049 also describes a method for coating metal surfaces using aqueous dispersions of film-forming resins. This method involves preparing an aqueous dispersion containing a mixture of neutralised water-dispersible carboxylic acid containing polymer having a carboxyl content of at least 8% by weight, a water-dispersible heat-curable thermosetting aminoplastic or polyepoxide resin and a water-insoluble, long chain monohydroxy alcohol having 8—36 carbon atoms; applying the aqueous dispersion to a metal surface and then baking the coating at 350°—450°F (177°—232°C) to volatilise the alcohol and cure the coating.

In U.S. Patent No. 3,960,979 it has further been proposed to coat the interior of food and beverage cans by means of a hot melt spray gun with a fast curing, high solids content coating composition comprising a blend of (a) a low molecular weight epoxy resin, (b) a liquid nitrogen resin or phenolic cross-linking agent, (c) a flexibilising polyol, (d) an inorganic or organic monomer or polymeric acid which acts both as reactant and catalyst and optionally (e) a surface modifier such as an acrylic polymer containing acrylic acid.

In addition to the foregoing can coating formulations, various other coating compositions containing acrylic type polymers and/or mixtures thereof with other film-forming resins are known.

U.S. Patent No. 3,492,252 describes latex coating compositions comprising an emulsion polymerised acidic interpolymer having a carboxyl content of 1 to 30 weight percent, preferably 3 to 15 weight percent; a monomeric diepoxide or a mixture thereof with a bisphenol-epichlorohydrin condensation product having an epoxy equivalent weight less than 200; and, optionally, a water-soluble, heat-reactive, film-forming material such as an aminoplast or phenol/formaldehyde condensation product. The disclosed compositions are useful as protective films for metal substrates which have been previously coated with pigmented primer, and are prepared by synthesising by emulsion polymerisation techniques a latex of the acidic interpolymer and then adding thereto the epoxy and water-soluble film-forming components, either "as is", or in the form of emulsions.

U.S. Patent No. 3,418,392 discloses thermosetting interpolymer emulsions containing as a cross-linking agent a mixture of a polycycloaliphatic polyepoxide (e.g. 3,4-epoxy-6-methylcyclohexylmethyl 2,4-epoxy-6-methylcyclohexanecarboxylate) and a reactive triazine compound (e.g. hexamethoxymethylmelamine), which are prepared by polymerising a thermosetting interpolymer containing at least one reactive monomer unit using standard aqueous emulsion polymerisation techniques and then adding to the resulting polymer emulsion from 0.5 to 30% by weight of the cross-linking agent mixture. Such coating compositions are recommended for use in texile print pastes, padding liquor for pigment dyeing of textiles, non-woven textile impregnation dispersions and generally as solvent-based protective coatings for metal surfaces and the like.

U.S. Patent No. 3,331,805 describes resin binder compositions for use in treating woven and non-woven fabrics. The binder compositions there disclosed comprise a linear copolymer containing at least 50% by weight of a monoethylenically unsaturated organic ester having from 4 to 9 carbon atoms and from 1 to 5% by weight of an unsaturated carboxylic acid, and a two-component cross-linking system comprising a mixture of equal amounts of an alkylated melamine/formaldehyde resin and a diepoxide resin. The binder system may be employed in the form of an aqueous dispersion or solution, or alternatively in the form of a slurry of fibrids obtained by shear precipitation of a dispersion of the resin.

U.S. Patent No. 4,139,514 discloses translucent or clear, water-borne polymer compositions comprising aqueous, essentially organic solvent-free solutions of interpolymer. Such compositions are prepared by forming a polymer latex by emulsion polymerisation of a mixture of (1) acrylic acid and/or methacrylic acid; (2) an acrylate or methacrylate ester; and optionally (3) a polymerisable ethylenically unsaturated monomer having a terminal vinyl group. The resulting latexes are then neutralised with a base to solubilise the polymer, yielding the water-borne polymer compositions. Such compositions are recommended for use as coatings or inks.

U.S. Patent No. 3,118,848 describes coating compositions which are prepared by mixing together a water-soluble salt of a vinyl polymer and a water-soluble epoxy or polyhydroxy compound. One or more water-soluble phenol-aldehyde or amino resins, notably water-soluble urea-aldehyde or melamine-aldehyde resins, may optionally be included as curing agents where low baking temperatures are contemplated.

U.S. Patent No. 3,156,740 describes thermosetting acrylic resin compositions adapted for application as coatings to protect metal surfaces from the action of water, soap, grease, light and prolonged heat. Illustrative of the preparation of such a thermosetting resin compositions, there are co-reacted (a) a copolymer of 2—10% of acrylic acid, 4.5—88% styrene and 9—93% of 2-ethylhexyl acrylate and (b) 1-epoxyethyl-3,4-epoxycyclohexane, and then there is mixed therein (c) 1-epoxyethyl-3,4-epoxycyclohexane, following which there is mixed therein (d) a melamine/formaldehyde resin in an amount of 5—50% by weight based on the total non-volatile content of the composition.

U.S. Patent No. 3,215,756 describes heat-curable mixtures of a vinyl polymer with an epoxy compound in the presence of an amino resin. For example, a methacrylic acid/methyl acrylate copolymer is admixed with a polyglycidyl ether of Bisphenol A and a urea-formaldehyde resin in an organic solvent and then coated on a substrate and baked to a thermoset film.

U.S. Patent No. 3,403,088 describes water-dispersed coating compositions which can be applied by electro-deposition. The coating compositions contain an at least partially neutralised acrylic interpolymer and an amine-aldehyde condensation product or a polyepoxide or both.

U.S. Patent No. 3,467,730 describes heat-convertible coating compositions which are prepared from carboxy-containing copolymers, epoxide resins and aminoplast resins. In an example, 37 grams of a 50% copolymer (72% styrene, 20% methyl acrylate and 8% acrylic acid) solution, 6.9 grams of a polyglycidyl ether of Bisphenol A and 8.3 grams of a butylated urea-formaldehyde resin were blended, drawn down on glass and cured at 200°C for 30 minutes.

Various types of microgel particles and coating compositions containing such particles have also been developed.

For example, U.S. Patent No. 4,172,066, describes water-swellable, shear-resistant microgel particles having a water-swollen diameter of 0.5 to 200 micrometers comprising particles of cross-linked, preferably water-soluble, addition polymer. Such microgel particles are prepared by the inverse emulsion or suspension polymerisation of water-soluble monomers such as acrylamide or mixtures thereof with other water-soluble monomers such as acrylic or methacrylic acid with a small amount of a cross-linking agent, and may be employed as thickening agents for styrene-butadiene copolymer latexes or as water permeability reducing agents in well-drilling applications.

British Patent No. 967,051 discloses cross-linked, polymeric microgel particles, comprising from 95 to 99 mole percent of monoethylenically unsaturated monomer (at least 50% of which is a lower alkyl ester of methacrylic acid) and from 5 to 0.1 mole percent of a cross-linking agent, which are substantially free of uncross-linked polymer having a viscosity average molecular weight greater than 200,000 and have a swelling ratio in toluene of from 2 to 6. The disclosed microgel particles are prepared by polymerising an aqueous emulsion of the monoethylenically unsaturated monomer and cross-linking agent until the reaction is from 80 to 95% complete and then, following the addition of an agent to inhibit the formation of high molecular weight uncross-linked material, completing the polymerisation reaction. After completion of the polymerisation reaction, the resulting microgel particles are filtered and dried, and then formulated into a coating composition by mixing with an organic solvent to form a microsol. Optionally, an organic solvent-soluble film-forming resin, such as a polymethacrylate, epoxy or alkyd resin, may also be employed in the microsol coating composition.

U.S. Patent No. 4,055,607 describes high solids content thermosetting acrylic polymer solutions which comprise a thermosetting acrylic interpolymer containing a reactive carboxylic acid and hydroxy groups dissolved in an organic solvent; at least 0.5 percent by weight of cross-linked microgel particles and an aminoplast resin. The cross-linked microgel particles comprise the addition copolymerisation product of hydroxy-containing and hydroxy-free monomers and a dispersion stabiliser which is prepared from methacrylic acid, glycidyl methacrylate and the reaction product of poly-12-hydroxystearic acid and glycidyl methacrylate.

3

Non-aqueous coating compositions containing similar microgel particles are also described in U.S. Patents Nos. 3,880,796 and 3,652,472.

Despite all the efforts which have been made, the various advances and improvements in coating compositions described above do not satisfy all the requirements of users, and a demand remains for further improvements in coating compositions suitable for use in coating metal surfaces such as the interior of food and beverage containers. The non-aqueous coating compositions described above, for example, while suitable for some uses, are formulated from organic solvents (such as xylene) which are unsuitable for use in food or beverage container applications. Moreover, while the aqueous based coating compositions mitigate somewhat the problems associated with the use of organic solvents, further reductions in the organic solvent content of these compositions and improvements in coating adhesion would be desirable.

The present invention provides a substantial and surprising step forward.

In accordance with the present invention, there is provided a novel class of polymeric microgel particles which are characterised by being water-dispersible, water-swellable, cross-linked polymer particles comprising the aqueous emulsion polymerisation product of from 10—50% based on total monomer weight of polymerisable carboxylic acid monomers, up to 5% based on total monomer weight of a difunctional cross-linking monomer, and one or more carboxyl-free, relatively water-insoluble polymerisable vinyl monomers. The microgel particles in accordance with the present invention exhibit a stability in aqueous media of at least one week, preferably at least four weeks, when an aqueous dispersion of the microgel particles of approximately 20 weight percent solids content is maintained at 140°F (60°C).

The present invention provides many advantages, among which are the following.

It provides cross-linked polymeric microgel particles which are suitable for use as stabilisers in the preparation of stable aqueous dispersions of heat-curable film-forming resins and which yield coatings having improved adhesion to metal surfaces.

It provides the possibility of preparing stable aqueous dispersions of film-forming resins which employ polymeric microgel particles to stabilise the film-forming resin in the aqueous solvent medium.

It provides stable aqueous dispersions of thermosetting organic film-forming resins which are stabilised by polymeric microgel particles and which are suitable for use in coating food and beverage containers.

It also makes possible the provision of an improved heat-curable resin coating system suitable for use in coating metal and other substrates.

In particular, it provides a coating system which comprises a stable dispersion of heat-curable resins in water which yields coatings having improved adhesion to metal surfaces.

It makes possible the coating of metal surfaces with a protective coating of a thermosettable film-forming resin which yields coatings having improved adhesion to metal surfaces and less water sensitivity than coatings produced from conventional aqueous dispersions of film-forming resin.

The present microgel particles find utility as thickening agents for aqueous solutions or as agents for reducing the permeability of porous structures in petroleum operations. A particularly preferred use of the present microgel particles, however, is as stabilisers for use in the preparation of aqueous dispersions of film-forming resins. In a further embodiment, the present invention thus also provides stable aqueous dispersions of film-forming resins. These dispersions comprise at least one water-dispersible organic film-forming resin dissolved in an organic water-miscible solvent, and from 10 to 50% by weight, based on the total weight of the solids portion of the dispersion, of the above-described microgel particles, dispersed in an aqueous solvent medium.

Due to the high dispersing ability of the microgel particles of this invention, stable aqueous dispersions of film-forming resins containing less than 20% by weight, and preferably less than 15% by weight, of organic solvent may readily be formulated using the above-described microgel particles as stabilisers. In contrast, the conventional aqueous dispersions closest to those of the present invention typically contain an organic solvent content of 20 to 30% by weight. Moreover, coatings produced from the present dispersions exhibit less water sensitivity and improved adhesion to metal substrates than coatings obtained from the prior art aqueous dispersions.

In other embodiments the present invention also provides a method for the preparation of the above-described aqueous dispersions. This method comprises the steps of dissolving at least one water-dispersible organic film-forming resin in a water-miscible organic solvent to form a solution of the resin, adding and admixing together from 10 to 50% by weight, based on the total solids of the solution, of the present microgel particles to the resin solution; at least partially neutralising the resulting admixture with ammonia or an organic base and then dispersing the admixture into an aqueous medium to provide a stable aqueous resin dispersion having a total solids content of 15 to 40 weight percent.

Further advantages of the invention will be apparent from the following description.

As is well known to those skilled in the art, microgel particles comprise small particles of polymer gel which generally have a diameter in the micrometer range or less. Typically such particles have a size which ranges from 0.05 to 200 micrometers in diameter.

The microgel particles of this invention comprise the polymerisation product of from 10—50% based on the total monomer weight, of polymerisable carboxylic acid monomers, up to 5%, based on the total monomer weight, of a difunctional cross-linking monomer; and one or more carboxyl-free, relatively

4

water-insoluble polymerisable vinyl monomers, which may form the balance of the polymerisation product. Optionally, minor amounts of various other polymerisable monomers, which do not adversely affect the polymerisation reaction and/or the performance of the microgel particles may be substituted for a portion of the carboxyl-free, relatively water-insoluble polymerisable vinyl monomers.

Key characteristics of the present microgel particles include the use of aqueous emulsion polymerisation techniques for the preparation thereof, a high acid functionality, water-swellability and the ability to form stable dispersions in aqueous media, either by themselves or with various water-dispersible film-forming resins. As used herein, the term "water-dispersible" means that the resin or other polymeric material neither forms a solution with water nor forms a precipitated mass of insoluble non-particulate gel therein, but instead forms a suspension of discrete particles with the aqueous medium.

As a result of the aforementioned characteristics of the microgel particles of this invention, the present microgel particles may advantageously be employed in applications requiring rapid sorbtion of aqueous fluids, e.g. sanitary articles such as diapers and belt pads, and in applications wherein the swelling or partial plugging properties of the polymer are particularly important, e.g. in the plugging of porous formations or structures such as in enhanced oil recovery operations or any of the various other petroleum operations described in U.S. Patent No. 4,172,066. The present microgels may also be usefully employed as thickening agents for aqueous solutions or water-containing compositions.

Due to their excellent stability in aqueous media and high dispersing power, however, the microgels of this invention are particularly suited for use in the preparation of aqueous dispersions of water-dispersible resins, such as aqueous dispersions of heat-curable film-forming resins. Among their various other characteristics, the present microgel particles exhibit a stability in aqueous media of at least one week, and preferably at least four weeks, when an aqueous dispersion of the microgel particles of about 20% solids content is maintained at 140°F (60°C). As a result of this excellent stability in aqueous media, aqueous dispersions containing reduced amounts of organic solvent as compared with conventional aqueous dispersions of this type may readily be prepared using the present microgel particles as dispersion stabilisers. For example, aqueous epoxy dispersions have been prepared by the present inventors utilising the microgels of this invention with as little as 11% by weight of organic solvent. In contrast, it has been found impossible to prepare conventional epoxy dispersions unless at least 17% (often substantially more) organic solvent was employed in order to provide dispersions of practical stability.

While it is known for example from U.S. Patents No. 4,289,811 and 3,908,049 to employ water-dispersible interpolymers having a high acid functionality as stabilisers for aqueous dispersions of film-forming resins, the present microgels differ significantly from the prior art stabilisers in two important respects: (1) the microgel particles of this invention are cross-linked and thus exist in the finished coating as discrete particles which are dispersed in a matrix of the film-forming resin rather than forming part of the resinous matrix itself; and (2) the present microgel particles have a much larger molecular weight than the stabilisers heretofore employed in the art.

As described above, the microgels of this invention are prepared by aqueous emulsion polymerisation. As is well known to those skilled in the art, aqueous emulsion polymerisation yields polymers of higher molecular weight than similar polymers prepared by solution polymerisation in organic solvents. The stabilisers which have heretofore been employed in the prior art for the preparation of aqueous dispersions of water-dispersible film-forming resins have been prepared by solution polymerisation in organic solvents and thus have possessed a lower molecular weight than the present microgels. The stabilisers of U.S. Patent No. 4,289,811, for example, typically have a number average molecular weight of at most about 150,000. In contrast, the present microgels generally have number average molecular weights which range from about $10^5$ to $10^6$ or more.

While not wishing to be bound by any specific theory or mode of operation, it is believed that the particulate nature and enhanced molecular weight of the present microgel particles contribute to the superior performance of the invention microgels as stabilisers for aqueous dispersions of water-dispersible resins. In addition to yielding dispersions of reduced organic solvent content, coatings produced from aqueous dispersions of film-forming resins containing the present microgels have surprisingly been found to exhibit improved adhesion and less water sensitivity than coating produced from conventional dispersions containing the non-cross-linked, low molecular weight interpolymers of the prior art as stabilisers. This result is believed to be due to the fact that, in contrast to the prior art stabilisers, the present microgels exist as discrete particles in the finished coating, and in addition have a higher molecular weight which decreases their sensitivity to water.

The microgels of this invention can broadly be described as cross-linked particles of copolymer containing as its essential monomeric components a small amount of a difunctional cross-linking monomer, a polymerisable carboxylic acid monomer and one or more polymerisable, carboxyl-free, relatively water-insoluble vinyl monomers. The exact chemical composition of the microgels can vary widely and is limited only by the requirements that the resulting microgels be water-dispersible as defined hereinabove, be swellable in water and have a stability in aqueous media such that an aqueous dispersion of the microgel of about 20% by weight solids content has a stability of at least one week, and preferably at least four weeks, when maintained at 140°F (60°C). For the purpose of the present invention, stable dispersions in accordance with the foregoing test comprise those dispersions in which less than 10%, based on the total solids content, of the microgel particles exist in the form of a precipitated mass of insoluble polymer.

The water-swellability of a given microgel formulation may be conveniently determined by measuring the change in viscosity which results when an aqueous emulsion of microgel particles (such as the emulsion obtained from emulsion polymerisation of the microgel forming monomers) is treated with ammonia or an organic amine in an amount sufficient to neutralise the free carboxylic acid groups of the microgel (further details relating to this neutralisation treatment are set forth hereinafter). Upon neutralisation, microgel particles suitable for use in the present invention swell in the aqueous emulsion, with the result that the viscosity of the emulsion visibly increases. The relative amount of viscosity increase is a function of the inherent water-swellability of the microgel formulation, with highly water-swellable microgels producing large increases in viscosity and non-swellable microgels producing little or no viscosity increase in the emulsion. Microgel formulations which are particularly preferred for use herein typically produce viscosity increases of at least 25%, based upon the viscosity of the emulsion prior to neutralisation. Microgel formulations which are not water-swellable according to the above-described test exhibit low stabilities in aqueous media and do not have sufficient dispersing power to stabilise aqueous dispersions of film-forming resins for commercially-desirable periods of time.

Microgel formulations satisfying the foregoing requirements will typically comprise 10—50%, preferably 25 to 45%, and most preferably 30 to 40%, by total weight of the monomer mixture, of the polymerisable carboxylic acid monomer; a small amount ranging up to 5%, preferably 1 to 3%, by total weight of the monomer mixture, of the difunctional cross-linking monomer; and (frequently the balance of the microgel composition) the relatively water-insoluble, carboxylic free polymerisable vinyl monomer.

The polymerisable carboxylic acid monomer comprises an $\alpha,\beta$-ethylenically unsaturated carboxylic acid which is substantially non-gelling when polymerised in aqueous emulsion with the various other components of the microgel. As used herein, the term "substantially non-gelling" means that polymerisation of the carboxylic acid monomer in aqueous emulsion does not produce a precipitated mass of non-particulate gel, but instead produces a discrete polymer particles of microgel dimension. Carboxylic acid monomers polymerisable in aqueous emulsion without gelling are well known to those skilled in the art. Examples of such acids include methacrylic acid, crotonic acid, itaconic acid (or anhydride), maleic acid (or anhyride), fumaric acid, various other substituted acrylic acids wherein the hydrocarbyl substituent contains from 3 to 8 carbon atoms, and the monoesters of dicarboxylic acids such as methyl hydrogen maleate and ethyl hydrogen fumarate, of which methacrylic acid is particularly preferred. Acrylic acid itself is not preferred for use in the present microgels since this acid produces undesirable non-particulate polymer gels during polymerisation in aqueous emulsion. If desired, the polymerisable carboxylic acid component may include a small portion (e.g. 1 or 2% by weight) of acrylic acid or other gelling carboxylic acid monomer in an amount which does not substantially alter the non-gelling characteristics of the monomer mixture. It is preferred, however, that the carboxylic acid component comprise only non-gelling monomers such as methacrylic acid.

The second essential monomeric component of the microgel particles is the relatively water-insoluble, carboxyl-free polymerisable vinyl monomer. Suitable monomers of this class include those carboxyl-free vinyl monomers which are polymerisable in aqueous emulsion and which have a greater affinity for water-insoluble film-forming resins, such as epoxy or phenolic resins, than for an aqueous solvent medium. The carboxyl-free vinyl monomer need not be completely water-insoluble. It is sufficient for the purpose of this invention if the vinyl monomer is sufficiently water-insoluble to produce water-dispersible polymers. Monomers satisfying this requirement are well known to those skilled in the art. Typical examples of such monomers include polymerisable vinyl aromatic monomers such as styrene, the o-, m- and p-alkyl or aryl styrenes wherein the substituent group has from 1 to 8 carbon atoms, such as o-methylstyrene, m-ethylstyrene, p-methyl-styrene, p-tert-butylstyrene, the 2,4-, 2,5- and 3,4-dimethyl-styrenes, 4-methoxystyrene, 4-phenylstyrene, 4-phenoxystyrene, 4-benzylstyrene, 2,6-dimethoxystyrene, 2,5-diethylstyrene, $\alpha$-methylstyrene and 3,4-alpha-methyl styrene, halostyrenes such as 4-chlorostyrene, the 2,5-, 3,4- and 2,6-dichlorostyrenes, the corresponding fluorostyrenes, as well as any of the various other substituted styrenes which satisfy the various solubility and polymersability requirements discussed above, vinyl toluene, isopropenyl toluene and vinylnaphthalene; alkyl or aryl esters of the $\alpha,\beta$-ethylenically unsaturated carboxylic acids having from 1 to 8 carbon atoms in the ester (alcohol) group, such as the methyl, ethyl, propyl, butyl, hexyl, ethylhexyl, phenyl and benzyl acrylates, methacrylates, and crotonates; dimethyl maleate, dibutylmaleate, dibutylfumarate; dihexylitaconate; nitrile monomers such as acrylonitrile and methacrylonitrile; vinyl halides such as vinyl chloride and vinyl bromide; vinyl esters such as vinyl acetate, vinyl propionate, vinyl stearate, vinyl butyrate and vinyl laurate; and mixtures thereof. Preferred monomers within the aforementioned class of materials include the various polymerisable vinyl aromatic monomers, methacrylate ester monomers, nitrile monomers and vinyl halide monomers described above, of which styrene and methyl methacrylate are particularly preferred.

Monomers within the aforementioned groups of materials may be polymerised with the carboxylic acid monomer and the cross-linking monomer to form microgels having useful properties. Dispersions of improved stability are obtained, however, when the carboxyl-free vinyl monomeric component comprises a mixture of two or more polymerisable carboxyl-free vinyl monomers. Preferred mixtures of carboxyl-free vinyl monomers for use in the present microgels comprise a substantial portion (i.e. more than half), based on the total amount of the carboxyl-free monomeric component in the microgel, of one or more polymerisable vinyl aromatic monomers, methacrylate ester monomers, nitrile monomers, vinyl halide monomers or mixtures thereof with a lesser amount of one or more monomers selected from the class of vinyl ester monomers, alkyl acrylate monomers and mixtures thereof. In this embodiment, the vinyl ester monomer or alkyl acrylate monomer will typically form less than 10% by weight, based on the total monomer weight of the microgel formulation. Examples of suitable carboxyl-free vinyl monomer mixtures which are particularly preferred for use herein include mixtures of styrene and/or methyl methacrylate with vinyl acetate and/or ethyl acrylate, such as styrene/vinyl acetate mixtures, styrene/ethyl acrylate mixtures, styrene/methyl methacrylate/vinyl acetate mixtures and styrene/methyl methacrylate/ethyl acrylate mixtures.

The difunctional cross-linking monomer is employed in an amount sufficient to cross-link the aqueous emulsion copolymer, thereby converting the copolymer to a non-linear polymeric microgel, without appreciably reducing the water swellability characteristics of the copolymer. Suitable amounts of cross-linking monomer can readily be determined for a given microgel recipe by examining the water-swellability of the finished microgel, as described above. Microgels satisfying this water-swellability test will typically contain up to 5% based on the total monomer weight of the difunctional cross-linking monomer, and preferably from 1 to 3% of the difunctional cross-linking monomer. Illustrative of difunctional cross-linking agents which may be used in the present microgels are compounds such as ethylene glycol dimethacrylate, tetraethylene glycol dimethacrylate, methylene bisacrylamide, methylene bismethacrylamide, divinyl benzene, vinyl methacrylate, vinyl crotonate, vinyl acrylate, divinyl acetylene, trivinyl benzene, glycerine trimethylacrylate, pentaerythritol tetramethacrylate, triallyl cyanurate, divinyl ethane, divinyl sulfide, divinyl sulfone, hexatriene, triethylene glycol dimethacrylate, diallyl cyanamide, glycol diacrylate, ethylene glycol divinyl ether, diallyl phthalate, divinyl dimethyl silane and glycerol trivinyl ether, of which divinylbenzene is particularly preferred.

Microgel formulations which have been found to be particularly useful as stabilisers for use in the preparation of aqueous dispersions of water-dispersible resins comprise from 10 to 50%, preferably from 25 to 45% and most preferably from 30 to 40% by weight of methacrylic acid or mixtures thereof with other α,β-ethylenically unsaturated carboxylic acid monomers; and up to 5%, preferably from 1 to 3% of divinylbenzene; with the balance of the microgel comprising carboxyl group free polymerisable vinyl monomers such as the polymerisable vinyl aromatic monomers, methacrylate ester monomers, nitrile monomers, vinyl halide monomers, mixtures thereof, and mixtures thereof with minor amounts (i.e. less than 50% by weight of the total carboxyl-free vinyl monomer present) of vinyl ester monomers and alkyl acrylate monomers, all weights being based on the total monomer weight except where otherwise noted. Within this subgenus, microgels comprising copolymers of methacrylic acid and divinylbenzene in the above-defined amounts; from 10 to 90%, preferably from 35 to 65% of styrene, from 0 to 50%, preferably from 10 to 30% of methyl methacrylate; and from 0 to 10% of ethyl acrylate and/or vinyl acetate are most preferred.

The microgel particles may be prepared by any conventional aqueous emulsion polymerisation technique known to those skilled in the art. Suitable polymerisation techniques of this type are described, for example, in U.S. Patents Nos. 3,492,252 and 4,139,514. Typically, the microgel particles are prepared by emulsifying the monomeric materials, and a water-soluble polymerisation catalyst, in water with a suitable emulsifier for the monomers, and then heating the resulting aqueous emulsion at a temperature of 30°C to 95°C, preferably 60°C to 80°C, in a stirred heated reactor for a time of one to four hours until the polymerisation reaction is substantially complete. The ratio of monomer to water media is selected in order to provide a polymer emulsion having a solids content of 10 to 45%, and preferably 20 to 40% by weight.

The polymerisation process can be carried out batchwise or continuously. It is possible to work entirely batchwise, emulsifying the entire charge of monomers and proceeding with polymerisation. It is usually advantageous, however, to start with part of the polymers which are to be used and add more monomers as polymerisation proceeds. An advantage of the gradual addition of monomers lies in reaching a high solids content with optimum control and with maximum uniformity of product. Additional catalysts may also be added as polymerisation proceeds.

Typically emulsifiers which may be employed include any of the conventional emulsifiers utilised in aqueous emulsion polymerisation such as the alkyl salts of various hydrocarbon sulfates and sulfonates such as sodium lauryl sulfate and sodium dodecylbenzene sulfonate, alkylphenoxypolyethoxyethanols having alkyl groups of about seven to twelve carbon atoms, such as heptylphenoxypolyethoxyethanols, octylphenoxypolyethoxyethanols, methyloctylphenoxypolyethoxyethanols, nonylphenoxypolyethoxyethanols and dodecylphenoxypolyethoxyethanols; polyethoxyethanol derivatives of methylene linked alkyl phenols; sulfur-containing agents such as those made by condensing the required proportion of ethylene oxide with a mercaptan such as nonyl, dodecyl or tetradecyl mercaptan or with alkylthiophenols having alkyl groups of six to fifteen carbon atoms; ethylene oxide derivatives of long-chain carboxylic acids, such as lauric, myristic, palmitic, oleic, and the like or mixtures of acids such as found in tall oil; ethylene oxide condensates of long-chained alcohols, such as octyl, decyl, lauryl or cetyl alcohols, ethylene oxide derivatives of etherified or esterified polyhydroxy compounds having a hydrophobic hydrocarbon chain.

The amounts of emulsifier or emulsifiers required vary primarily with the concentration of monomers to be handled and to a minor extent with choice of emulsifier, monomers and proportions of monomer.

Generally, the amount of emulsifying agent is 2% to 12% of the weight of the mixture of monomers and is preferably 4% to 7% of this weight. If the emulsion is to contain a relatively low concentration of microgel somewhat less than minimum emulsifying agent indicated by the above rule may prove desirable. In such case the concentration of emulsifying agent in the aqueous emulsion may desirably be at least 1% of the emulsion and may be as much as 7% of the weight of the aqueous emulsion.

The polymerisation catalyst likewise may comprise any of the water-soluble emulsion polymerisation catalysts known to those skilled in the art. The concentration of the catalyst may vary from 0.01 to 3 weight percent based on the weight of monomers charged; it is preferably from 0.05 to 2 weight percent and most preferably from 0.1 to 1 weight percent. The particular concentration used in any instance will depend upon the specific monomer mixture undergoing reaction and the specific catalyst employed; these facts are known to those skilled in the art. It is also known that traces of metal ions can be added as activators to improve the rate of polymerisation, if desired. Illustrative of suitable catalysts one can mention hydrogen peroxide, peracetic acid, t-butyl hydroperoxide, di-t-butyl hydroperoxide, dibenzoyl peroxide, benzoyl hydroperoxide, 2,4-dichlorobenzoyl peroxide, 2,5-dimethyl-2,5-bis(hydroperoxy)hexane, perbenzoic acid, t-butyl peroxypivalate, t-butyl peracetate, dilauroyl peroxide, dicaproyl peroxide, distearoyl peroxide, dibenzoyl peroxide, diisopropyl peroxydicarbonate, didecyl peroxydicarbonate, dieicosyl peroxydicarbonate, di-t-butyl perbenzoate, 2,2-azobis-2,4-dimethylvaleronitrile, ammonium persulfate, potassium persulfate, sodium persulfate, sodium perphosphate, azobisisobutyronitrile, as well as any of the other known catalysts. Also useful are the redox catalyst systems such as sodium persulfate-sodium formaldehyde sulfoxylate, cumene hydroperoxide-sodium metabisulfite, hydrogen peroxide-ascorbic acid, and the other known redox systems.

A chain transfer agent may optionally be present during the polymerisation reaction at a concentration of 0 to 5 weight percent. The preferred chain transfer agents are those that are relativley water-soluble since they are more effective in the aqueous polymerisation system than are those that are water-insoluble. Illustrative of such materials are the known alkyl and aryl mercaptans such as the essentially water-soluble butyl mercaptans, mercaptoacetic acid, mercaptoethanol, 3-mercapto-1,2-propanediol and 2-methyl-2-propane-thiol. Many water-insoluble mercaptans can also be used, such as t-dodecyl mercaptan, phenyl mercaptan, pentaerythritol, tetramercaptopropionate, octyldecyl mercaptan, tetradecyl mercaptan. If a chain transfer agent is employed, it is preferred that only small amounts within the aforementioned range be utilised in order to minimise the inhibitory effect of these materials on the formation of high molecular weight microgel particles.

Upon completion of the polymerisation reaction, the emulsion has an appearance similar to a polymeric latex. The microgel containing emulsion may be either used "as is", for example in zhe preparation of aqueous dispersions of water-dispersible resins, or alternatively the microgel may be recovered in dry form by cooling and then drying the emulsion in an oven to provide a dried microgel. This latter material may then be powdered and employed for any of the various purposes discussed above.

A particularly preferred use of the microgel particles of this invention is as stabilisers for aqueous dispersions of water-dispersible resins. While broadly such dispersions may contain any resin known to those skilled in the art which is dispersible in aqueous media, where the dispersion is designed for use as a coating composition, the water-dispersible resin will generally comprise a water-dispersible film-forming resin such as the heat-curable film-forming resins and especially the heat-curable, thermosetting film-forming resins. Illustrative of this group of materials are the heat-curable, thermosetting epoxy, phenolic, polyester, alkyd and aminoplast resins, as well as the various mixtures thereof. Such resins are well known to those skilled in the art of coating composition manufacture and are widely available commercially.

Aqueous dispersions finding particular advantage for coating metal surfaces such as metallic food and beverage containers will typically contain mixtures of one or more epoxy and/or phenolic resins in admixture with one or more aminoplast resins. In addition to contributing to the film-forming characteristics of the coating, the aminoplast resin also serves to cross-link the epoxy and/or phenolic resin. The epoxy and/or phenolic resins need not necessarily be employed in admixture with the aminoplast resin. The enhanced cross-linking resulting from the conjoint use of these resins with an aminoplast resin contributes, however, to the strength and toughness of the protective coating, and for this reason preferred dispersions in accordance with this invention preferably contain one or more epoxy and/or phenolic resins in combination with one or more aminoplast resins.

Epoxy resins particularly advantageous for use in the coating compositions, i.e. aqueous dispersions, of this invention are glycidyl polyethers of polyhydric phenols and hydrogenated phenols which contain more than one 1,2-epoxide group per molecule. Such polyepoxide resins are derived from an epihalohydrin and a polyhydric phenol or hydrogenated phenol and have epoxide equivalent weights of 150 to 8,000. Examples of epihalohydrins are epichlorohydrin, epibromohydrin and epiiodohydrin with epichlorohydrin being preferred. Polyhydric phenols are exemplified by resorcinol, hydroquinone, p,p'-dihydroxydiphenylpropane (or Bisphenol A as it is commonly called), p,p'-dihydroxydiphenyl ethane, bis(2-hydroxynaphthyl)methane, 1,5-dihydroxynaphthalene, novolak resins made from the reaction of mono and diphenols with aldehydes as well as phloroglucinol with Bisphenol A being preferred. Epoxy resins made from hydrogenated versions of these phenols are also useful in this invention. These epoxy resins are well known in the art and are made in desired molecular weights by reacting the epichlorohydrin and the polyhydric compound in various ratios or by reacting a dihydric phenol with a lower molecular weight epoxy resin. Particularly preferred epoxy resins for use in this invention are glycidyl polyethers of Bisphenol A having epoxide equivalent weights of 1000 to 4000. Commercially-available epoxy resins of this type include the Epi-Rez 540 and Epi-Rez 550 epoxy resins marketed by Celanese Specialty Resins Company and Epon 1007 and 1009 epoxy resins marketed by the Shell Chemical Company. (Epi-Rez and Epon are Trade Marks).

Preferred phenolic resins comprise the reaction product of a phenol or substituted phenol with various aldehydes using an alkaline catalyst and a molar excess of the aldehyde (i.e. resole resins). Examples of suitable phenolic compounds include phenol itself, cresol, xylenol and substituted phenols such as the alkylated phenols, with phenol and alkylated phenols such as para-tertiary butyl phenol, para-tertiary amylphenol and paratertiary octyl phenol being particularly preferred. Suitable aldehydes include any of the aldehydes commonly used for use in phenolic resins, with formaldehyde being particularly preferred. Commercially-available phenolic resins of this type include the Varcum 2980, Varcum 5416, Varcum 5797, Varcum 8345 and Varcum 8357 resins marketed by Reichhold Chemical Company and the Phenodur 285 and 307 resins marketed by American Hoechst. (Varcum and Phenodur are Trade Marks).

The aminoplastic component employed can be any of the aldehyde condensation products of compounds such as urea, ethylene urea, dicyanamide, various triazines, e.g. melamine, benzoguanamine and acetoguanamine and mixtures and etherified derivatives of these condensation products.

Procedures for preparing aminoplasts are described in *Aminoplasts,* C. P. Vale (Cleaver-Hume Press, Ltd. London). Examples of aminoplast preparation and application are given in U.S. Patents Nos. 2,957,835; 3,501,429; 3,222,159; 3,535,148; 3,773,721; 3,852,375; 3,891,590; 3,954,715; 3,965,058; 3,979,478 and 4,071,578.

The aldehyde used in the preparation of the aminoplasts may be (1) monofunctional or (2) polyfunctional, having at least two aldehyde groups separated by at most one carbon atom; such as formaldehyde, paraformaldehyde, polyoxymethylene, trioxane, acrolein and aliphatic or cyclic aldehydes such as glyoxal, acetaldehyde, propionaldehyde, butyraldehyde and furfuraldenyde. Condensation, when using formaldehyde, fufuraldehyde, paraformaldehyde, polyoxymethylene or trioxane is generally accomplished with the use of a mildly acid or mildly alkaline catalyst. When using acrolein, glyoxal, acetaldehyde, propionaldehyde or butyraldehyde, condensation is generally accomplished by combining the reactants in the presence of a strongly acid catalyst, neutralising the reaction product, adding more aldehyde and further reacting in the presence of a mildly acid or alkaline catalyst. The preferred aldehyde is formaldehyde.

The aldehyde condensation products (i.e. aminoplasts) contain methylol or similar alkylol groups, the structure of the alkylol group depending upon the particular aldehyde employed. All or part of these alkylol groups may be etherified by reaction with an alcohol. Among the preferred amine-aldehyde products for use in the present invention are those which are substantially alkylated by an etherification reaction, i.e. in which at least a major portion of the alkylol groups have been reacted with an alcohol. Essentially any monohydric alcohol can be employed for this purpose, including such alcohols as methanol, ethanol, propanol, butanol, heptanol and other alkanols having up to 12 carbon atoms or more, as well as benzyl alcohol and other aromatic alcohols, cyclic alcohols such as cyclohexanol, monoethers of glycols such as the Cellosolves and Carbitols and halogen-substituted or other substituted alcohols, such as 3-chloro-propanol.

When using alcohols having more than 4 carbon atoms, the methylol groups are first etherified with a lower alcohol containing 1 to 4 carbon atoms followed by ether interchange reaction to replace the lower alcohols with the higher ones. The preferred alcohols are methanols, butanol and similar lower alkanols with methanol being most preferred.

Particularly preferred aminoplasts are those based on melamine, formaldehyde and methanol. Commercially-available aminoplasts of this type include Cymel® 301 and Cymel® 303 marketed by American Cyanamid. (Cymel is a Trade Mark).

The aqueous dispersions of this invention may be prepared by dissolving at least one of the various film-forming or other water-dispersible resins in an organic solvent to form a solution of the resin. To facilitate formation of the resin solution, the admixture of resin and organic solvent is usually heated at a temperature of 70°C to 150°C until the resin is substantially completely dissolved. As discussed above, in the preferred embodiment, the film-forming resin admixed with the organic solvent preferably comprises one or more heat-curable thermosetting epoxy and/or phenolic resins, desirably in combination with one or more aminoplast resins. The aminoplast resin may either be added to the mixture conjointly with the various other film-forming resins, or alternatively the addition of the aminoplast may be delayed until later in the preparation sequence as set forth more fully below.

The organic solvent is preferably one which is substantially water-miscible, either in the form of a single polar compound, or as a mixture of compounds which can include non-polar constituents. The boiling point of the organic solvent component preferably will vary in the range from 150°F to 500°F (65°C to 260°C).

Suitable organic solvents, either alone or in admixture, include diisobutyl ketone, methyl isobutylketone, hydroxyethyl acetate, 2-ethoxyethyl acetate, propylene glycol monomethyl and/or monoethyl ether, ethylene glycol monobutyl ether, ethylene glycol, propylene glycol, butylene glycol, diethylene glycol, isopropanol, n-butanol, t-butanol, amyl alcohol, cyclohexanol, dioxane, tetrahydrofuran, dimethylformamide and dimethylacetamide. Non-polar solvents which can be included as a minor constituent of the organic solvent component include aliphatic and aromatic hydrocarbons such as naphtha, heptane, hexane, mineral spirits, decane, benzene, chlorobenzene, toluene and xylene.

To the resulting resin solution, maintained at a temperature of 80°C to 100°C, a stabilising amount of microgel formulation is then added and thoroughly mixed in to provide a homogeneous mixture. The microgel formulation is conveniently prepared in advance of the dispersion preparation and may be employed either in the form of a dry microgel powder or alternatively in the form of an aqueous dispersion of microgel particles. In this latter embodiment, the aqueous dispersion of microgel conveniently comprises the aqueous microgel emulsion obtained during polymerisation of the microgel particles.

The resulting resin/microgel solution is thereafter dispersed in an aqueous solvent medium by first neutralising the acid groups of the microgel and then adding the aqueous solvent medium. A water-in-oil emulsion is first formed, which as more water is added inverts to form an oil-in-water dispersion.

The neutralisation step is accomplished by treating the resin/microgel solution with a basic reagent in an amount sufficient to at least partially neutralise the carboxylic acidity which is present. It is essential that the degree of neutralisation be sufficient to provide a product medium pH which is in the range of from 2 to 10, and preferably in the range from 4 to 8. Besides improving the solubility properties of the resinous constituents, the neutralisation step suppresses the level of functional group interaction and imparts stability to the emulsion.

As another important aspect of the present invention, it is essential that the neutralised carboxylic acid groups in the dispersion coating composition be converted to free carboxylic acid groups during any subsequent heat-curing cycle to which the coating composition is subjected. In order to satisfy this requirement, it is preferred to employ a basic reagent for the neutralisation step which is either ammonia or a volatile organic amine.

Illustrative of suitable basic reagents are primary, secondary and tertiary amine compounds, such as ethylamine, butylamine, dimethylamine, diisopropylamine, dimethylethylamine, cyclohexylamine, allylamine, benzylamine, m-toluidine, morpholine, ethanolamine, diethanolamine, and triethanolamine, and other basic reagents such as ammonium hydroxide.

If the aminoplast resin has not been added previously, the aminoplast is then added to the neutralised emulsion to complete the coating composition. The resulting dispersion normally is in the form of a single phase suspension of solubilised resin solids and microgel particles having an average resin particle size of less than one micrometer. As discussed above, the microgel particles present in the dispersion preferably have an average particle size of less than about one micrometer.

The aqueous dispersions of this invention will generally contain from 50 to 90%, more preferably from 60 to 80% and most preferably from 65 to 80% by weight based on the total solids weight of the dispersion of the film-forming resin or resins, stabilised with from 10 to 50%, preferably from 20 to 40% and most preferably from 20 to 35% by weight of microgel particles, again based on the total solids weight of the dispersion.

The amount of organic solvent present in the dispersion will usually be less than 20% and preferably less than 15% by weght, based on the total weight of the composition. As discussed above, a unique feature of the aqueous dispersions of this invention is the ability to formulate dispersions containing smaller amounts of organic solvents than conventional dispersions of film-forming resins. It is most preferred therefore that the organic solvent be used in as small quantities as possible, i.e. that amount just sufficient to dissolve the film-forming resin.

The quantity of water employed for the dispersion-forming procedure can vary over a broad range as dictated by practical considerations. A typical aqueous dispersion will have a solids content in the range from 15 to 40 weight percent, and preferably in the range from 20 to 30 weight percent, based on the total weight of the aqueous dispersion.

In the particularly preferred dispersions described above containing one or more epoxy resins and/or phenolic resins in combination with one or more aminoplast resins, the epoxy and/or phenolic resins will generally be present in an amount of 50 to 90%, preferably 53 to 78% by total weight of the solids portion of the dispersion. The aminoplast component will typically form from 0 to 10%, preferably from 2 to 7%, based on the total solids weight of the dispersion, with the organic solvent, microgel and aqueous solvent medium being employed in the amounts described above.

Optionally there can be incorporated into the aqueous dispersion coating composition of the invention other components which do not interfere with the stability and other advantageous properties of the coating composition. Illustrative of an additional component which may be employed is 0.05—5 weight percent of a plasticiser, based on the weight of the resinous film-forming solids in a coating composition. Typical plasticisers include butyl benzyl phthalate, dibutyl phthalate, triphenyl phosphate, dicyclohexyl phthalate, dibenzyl phthalate, mixed benzoic acid and fatty oil acid esters of pentaerythritol, diethyleneglycol dibenzoate, butyl phthalyl, butyl glycolate, tricresyl phosphate, toluene ethyl sulfonamide and hexamethylene diphthalate. Additional other components include colourants and waxes.

An aqueous dispersion of mixed resins produced in accordance with the present invention inherently has exceptional phase stability and shelf-life. A typical aqueous dispersion coating composition of the present invention can remain substantially unchanged for more than one year at 77°F (25°C). An aqueous

10

dispersion coating composition of the invention is capable of tolerating at 120°F (49°C) temperature for more than three months without any apparent visible change in the dispersion phases.

As noted previously, during the baking and curing phase the volatile basic reagent employed to neutralise the coating composition evolves from the applied coating, thereby providing free reactive carboxyl groups. The said reactive carboxyl groups interact with the epoxy groups of the epoxy component to yield cross-linked ester linkages. Hydroxyl groups which are initially present and which are formed *in situ* during the baking cycle are highly reactive and condense with the aminoplast component, thereby providing an additional cross-linking mechanism.

The coating compositions of this invention are particularly useful as coating compositions for the interior of aluminium and steel cans and can be applied to the interior of said cans by airless spray application. The closures of such cans can also be coated with the composition of this invention, such coatings being applied by roller coating processes. The coatings for cans may be applied to dry film thicknesses of 0.1 to 0.5 mil (0.0025 to 0.0127 mm) and may be cured by passing the metal through gas-fired ovens heated to 315°F to 425°F (157°C to 218°C) in stages. The total residence time in these ovens is a matter of seconds, generally 30 seconds to 4 minutes.

In other applications, i.e. as metal primer coatings, the coating compositions may be cured at a temperature of 300°F to 500°F (149°C to 260°C) for a time sufficient to obtain a cure. The coating compkositions can be formulated into clear coatings as hereinbefore described or into pigmented coatings. Pigments can be added using well known formulating procedures. Other additives which can be incorporated in the coating compositions include coalescing solvents, levelling agents, wetting agents, dispersions of other resins, water-soluble resins, thickening agents, suspending agents, surfactants, defoamers and adhesion promoters.

It is the combination of the three essential constituents of the present invention, the carboxylic-acid group free polymerisable vinyl monomer, the unsaturated carboxylic acid monomer and the difunctional cross-linking monomer which makes possible the provision of the water-swellable stable microgel particles of the invention. In order that the stability should comply with the minima specified herein, the amounts of these constituents may be controlled as necessary within the ranges indicated.

The following Examples are presented to illustrate the invention. Unless otherwise designated, parts and percentages are by weight.

Example 1

To a suitable polymerisation reactor equipped with a stirrer, reflux condenser, thermometer and an inlet for nitrogen gas were added 1624 grams of water, 11.4 grams of Siponate DS-10 (a sodium dodecyl benzene sulfonate surfactant available under this Trade Mark from Alcolac, In c.) and 7.4 grams of n-butanol. The mixture was stirred and nitrogen flow started. The following monomer formulation was then added: 284 grams of styrene, 169 grams of methacrylic acid, 29 grams of vinyl acetate and 10 grams of divinyl benzene (55% active, available from American Hoechst). The polymerisation mixture was heated to 60°C and one round of the following initiators was added: 1.9 grams of a 10% aqueous ammonium persulfate solution, 2.3 grams of a 0.1% ferrous sulfate solution and 2.5 grams of a 10% sodium hydrosulfite solution. The temperature was maintained at 65°C and after 30 minutes another round of initiators was added as before. Polymerisation continued for another hour and the sample was cooled and dried in an oven at 85°C to provide solid microgel which was subsequently powdered.

An aqueous epoxy dispersion was then prepared from the microgel as follows: to a three-litre kettle equipped with an anchor agitator, thermometer and reflux condenser, the following were added: 915 grams of a commercially-available powdered epoxy resin marketed under the Trade Mark Epi-Rez® 540 by Celanese Specialty Resins Company, comprising a glycidyl polyether of Bisphenol A having an epoxide equivalent weight of 1600—2000; 306 grams of Epi-Rez® 550 epoxy resin marketed by the same manufacturer, comprising a glycidyl polyether of Bisphenol A having an epoxide equivalent weight of 2400—4000; 415 grams of butyl Cellosolve (ethylene glycol monobutyl ether available under this Trade Mark from Union Carbide) and 610 grams of n-butanol. The mixture was stirred and heated to 105°C to dissolve the epoxy completely. The solution was then cooled to 90°C and 476 grams of the powdered microgel were dusted in and the admixture mixed thoroughly. Then 1285 grams of water were added, followed by the slow addition of 34 grams of an amine mixture composed of a 57/43 weight ratio of triethanolamine/diethanolamine. As the mixture thickened, agitation was increased. Thereafter 3855 grams of water were added to provide a stable, aqueous dispersion of epoxy resin. Finally, when the dispersion had cooled, 38 grams of Cymel® 303 aminoplast (hexamethoxymethyl melamine available under this Trade Mark from the American Cyanamide Co.) were added with subsequent stirring.

The stable, aqueous epoxy dispersion had a Zahn 2 viscosity of 34 seconds and a solids content of 22.2%.

The interior of 12 ounce (340 g) aluminium and electrolytic tin plated (ETP) cans were coated with the coating composition using airless spray, to a dry film weight of 120 mg (beer weight) or 175 mg (beverage weight). The coatings were cured by baking for 60 seconds at an oven temperature of 188°C.

The continuity of the coatings were determined by a conductivity test carried out by filling the coated can with a 1% solution of sodium chloride in water and then determining the milliamperes of leakage current through the coating 30 seconds after a potential of 6.2 volts is applied between the salt solution and the can exterior. High readings indicate defects in the coating, e.g. craters, voids and bubbles, which in use could result in contamination of the can contents and/or corrosion of the container. A milliampere (mA) reading (also referred to as an Enamel rater reading) of 0 to 25 is acceptable. The conductivity of the coatings was found to have an average, based on 24 cans, of 9.4 mA at beer weights and 8.7 mA at beverage weights.

The blister threshold, i.e. the applied dry film weight at which blisters or bubbles form in the film from escaping solvent or water, was greater than 110 mg.

Films were cast from the coating composition onto electrolytic tin plated (ETP) steel panels to a dry film thickness of 0.2 mil (0.005 mm) using a wire wound Meyer rod. After baking at 188°C, for one minute, the films were well cured. The wet adhesion of the films was then tested as follows: each of the film samples was immersed in a water bath at 82°C and dilute acid to simulate the acidic nature of soft drinks. Within one minute of removal from the baths described above, the film surface was dried with a cloth and scribed with a cross-hatch pattern. A high tack cellophane tape was applied over the scribed portion and was removed with a jerk. The amount of film which remained on the panel was visually estimated and was rated as 10 for no removal and 0 for total removal.

The double coat adhesion was tested by applying a second coating over the first cured coating, using the same film weight and curing conditions as used for the first coating, and then estimating film removal as described above. The single and double coat wet adhesion of each of the films of this Example was rated as 9—10.

Stain resistance of the coatings to Welch's strawberry soda was also excellent. Flavour tests detected no off-flavour with either water or beer. Gas chromatographic tests for residual solvents in the coating revealed less than 0.5 ppm of any solvents.

Example 2

Following the procedure of Example 1, an epoxy dispersion was prepared utilising the styrene/methacrylic acid/vinylacetate/divinyl benzene microgel of Example 1. The epoxy resin used for this dispersion was a Bisphenol A terminated epoxy of a molecular weight of about 3,000. The procedure for dispersion preparation was the same as used in Example 1. Aluminium cans sprayed with this dispersion were tested as in Example 1 and excellent wet adhesion results with ratings of 9—10 for single and double coatings were obtained.

Example 3

To a 5 litre, three-necked flask equipped with a stirrer, thermometer and nitrogen inlet were added 1624 grams of water, 11.4 grams of Siponate® DS-10 (a sodium dodecyl benzene sulfonate surfactant available under this Trade Mark from Alcolac, Inc.), 6.37 grams of a 10% aqueous solution of sodium hydrosulfite and 7.4 grams of n-butanol. The following monomer mixture was prepared: 285 grams styrene, 169 grams methacrylic acid, 29 grams ethyl acrylate and 10 grams divinyl benzene. 20% of this formulation was added to the polymerisation reactor, stirring begun and the polymerisation mixture heated to 65°C. Then 1.45 grams of a 10% ammonium persulfate solution and 4.6 grams of a 0.1% ferrous sulfate solution were added. The remaining monomer mixture was added over a period of 90 minutes along with 4.4 ml of a 10% ammonium persulfate solution diluted to 100 ml with water. Polymerisation was done at 90°C with tertiary butyl hydroperoxide added at the end of the monomer feeds to ensure complete polymerisation of the monomers.

In a separate reactor equipped with a stirrer, thermometer and reflux condenser, 114.4 grams of a Bisphenol A terminated epoxy resin of molecular weight of about 3000 were dissolved in 39 grams of butyl Cellosolve (ethylene glycol monobutyl ether available under this Trade Mark from Union Carbide), and 57 grams of butanol. To this epoxy solution were added 205 grams of the aqueous microgel emulsion prepared above and 17 grams of water. Thereafter, 11.2 grams of the amine mixture used in Example 1 were added to the mixture, followed by 323 grams of water. Finally, 10.2 grams of Cymel 303 (hexamethoxymethylmelamine available under this Trade Mark from the American Cyanamid Co.) were added. Aluminium cans coated with this dispersion exhibit excellent wet adhesion for single and double coats having ratings of 10, and meet all properties required for sanitary linings of cans used for packaging beer and soft drinks.

Example 4

A series of aqueous dispersions of mixed epoxy and phenolic resins was prepared employing the aqueous styrene/methacrylic acid/ethyl acrylate/divinyl benzene microgel emulsion of Example 3 as stabiliser. Each of these dispersions was prepared by dissolving 97 grams of a Bisphenol A terminated epoxy resin of molecular weight 3000 and 17.2 grams of a selected phenolic resin in 39 grams butyl Cellosolve and 57 grams n-butanol. To this solution were added 205 grams of the aqueous microgel emulsion. 17 grams of water were then added, followed by 11 grams of the amine mixture used in Example 1. Thereafter, 323 grams of deionised water were added followed by 10 grams of Cymel 303. The phenolic resins employed in each of these dispersions included Varcum® 8357, 5416, 8345, 2980 and 5797 (Reichold Trade Marks) and Phenodur® 285 and 307 (American Hoechst Trade Marks).

The resulting dispersions were tested as food can coatings on tin plate and exhibited good properties

12

in tests for blush resistance, solvent resistance, single and double coating wet adhesion, fabrication testing such as bending and food stain resistance to tomato paste and dog food. The single and double coating wet adhesion of those coatings was rated at 8—9.

Example 5

An aqueous epoxy dispersion was prepared using a microgel formulation prepared as in Example 3, but containing a monomer mix consisting of 142 grams of styrene, 142 grams of methyl methacrylate, 169 grams of methacrylic acid, 29 grams of ethyl acrylate and 10 grams of divinyl benzene. The epoxy employed in this dispersion comprised a Bisphenol A terminated epoxy of molecular weight 3000. With these exceptions, the dispersion preparation was otherwise in accordance with Example 3. When tested as a coating for aluminium cans at beer and beverage weights, excellent single and double coating wet adhesion results, with a rating of 8—10, were obtained.

Example 6

Following the procedure of Example 3, an epoxy dispersion utilising microgel identical to that of Example 3 except that the amount of divinyl benzene in the monomer mix was reduced from 10 grams to 5 grams was prepared. In order to provide an acceptable application viscosity, the solids level of the dispersion was also adjusted to 18%. Films on aluminium cans obtained from this dispersion were tested and exhibited good wet adhesion properties for single and double coatings with ratings of 9—10.

**Claims**

1. Water-swellable, water-dispersible polymeric microgel particles formed of a cross-linked, aqueous emulsion polymerised copolymer comprising:

(a) at least one relatively water-insoluble carboxylic acid group-free polymerisable vinyl monomer,

(b) from 10 to 50%, based on the total monomer weight, of at least one polymerisable $\alpha,\beta$-ethylenically unsaturated carboxylic acid monomer, the at least one carboxylic acid monomer being substantially non-gelling when copolymerised with the at least one acid group-free monomer in an aqueous emulsion; and

(c) up to 5%, based on the total monomer weight, of a difunctional cross-linking monomer.

2. The microgel particles of Claim 1, wherein ingredient (b) is methacrylic acid or a mixture thereof with other $\alpha,\beta$-ethylenically unsaturated carboxylic acids which when copolymerised with said carboxylic acid group-free monomers in an aqueous emulsion are substantially non-gelling; and ingredient (a) is at least one carboxylic acid group-free polymerisable vinyl monomer forming the balance of said copolymerisation product, said acid group-free polymerisable vinyl monomer being selected from polymerisable vinyl aromatic monomers, methacrylate ester monomers, nitrile monomers, vinyl halide monomers, mixtures thereof and mixtures thereof with minor amounts of vinyl ester monomers and alkyl acrylate monomers.

3. The microgel particles of Claim 2, wherein ingredient (b) is methacrylic acid; ingredient (c) is divinylbenzene; and ingredient (a) is from 10 to 90%, based on the total monomer weight, of styrene, which may be partly replaced by one or both of the following:

(d) from 0 to 50%, based on the total monomer weight, of methyl methacrylate; and

(e) from 0 to 10%, based on the total monomer weight, of ethyl acrylate, vinyl acetate or a mixture thereof.

4. The microgel particles of Claim 3, which comprise the addition copolymerisation product, formed in an aqueous emulsion, of methacrylic acid, styrene, vinyl acetate and divinylbenzene.

5. The microgel particles of Claim 3 which comprise the addition copolymerisation product, formed in an aqueous emulsion, of methacrylic acid, styrene, ethyl acrylate and divinylbenzene.

6. The microgel particles of Claim 3 which comprise the addition copolymerisation product, formed in an aqueous emulsion, of methacrylic acid, styrene, ethyl acrylate, methyl methacrylate and divinylbenzene.

7. The microgel particles of any of Claims 1—6 in dry form.

8. A microgel composition comprising microgel particles of any of Claims 1—6 dispersed in an aqueous medium.

9. A stable aqueous dispersion of organic, water-dispersible, film-forming resin, comprising:

(a) at least one water-dispersible, film-forming resin dissolved in an organic water-miscible solvent;

(b) a dispersing amount of an aqueous solvent medium; and

(c) from 10 to 50% by weight, based on the total solids weight of the dispersion, of a stabiliser for stabilising said film-forming resin in said aqueous solvent medium, said stabiliser comprising the polymeric microgel particles of any of Claims 1—7 having the acid groups thereof at least partially neutralised with ammonia or a volatile organic amine.

10. The aqueous dispersion of Claim 9, wherein the dispersion has a solids content of from 15 to 40% and an organic solvent content of less than 20% by weight.

11. The aqueous dispersion of Claim 10, wherein the dispersion has a solids content of from 20 to 30%, and the organic water-miscible solvent is present in an amount which is just sufficient to dissolve the organic film-forming resin.

12. The aqueous dispersion any one of Claims 9—11, wherein the organic film-forming resin forms 50 to 90% by weight, and the microgel particles form 10 to 50% by weight, based on the total solids weight of the dispersion.

13. The aqueous dispersion of any of Claims 9 to 12, wherein the organic film-forming resin is a heat-curable, thermosetting epoxy resin, phenolic resin, polyester resin, aminoplast resin or a mixture of any thereof.

14. A heat-curable coating composition, in the form of the aqueous dispersion of any of Claims 9 to 12 as dependent on Claim 4, wherein the film-forming resin is at least one thermosetting film-forming resin selected from epoxy resins comprising a glycidyl polyether of a polyhydric phenol or hydrogenated phenol containing an average of more than one epoxide group per molecule and having an epoxy equivalent weight in the range from 150 to 8000, phenolic resole resins, and mixtures thereof, the composition optionally containing up to 10% by weight, based on the total solids weight of the dispersion, of an aminoplast resin.

15. A process for preparing the aqueous dispersion of any of Claims 9—14 comprising the steps of:

(a) dissolving the water-dispersible film-forming resin in the water-miscible organic solvent to form a solution of the resin,

(b) separately (either before, during or after step (a)) preparing the stabiliser for the film-forming resin by polymerising the corresponding monomers in an aqueous emulsion to form the polymeric microgel particles;

(c) admixing 10 to 50% by weight, based on the total solids weight of the dispersion, of the polymeric microgel particles with the solution of the film-forming resin;

(d) at least partially neutralising the admixture with ammonia or a volatile organic amine; and

(e) dispersing the admixture into an aqueous medium to provide a stable aqueous resin dispersion.

16. The process of Claim 15, which comprises the step of adding an aminoplast resin to the aqueous resin dispersion after step (e).

17. A method of protecting the surface of an article which comprises applying to the surface of the article a coating of the aqueous dispersion of any of Claims 9—14 or prepared by the process of Claim 15 or 16, and then heat-treating the coating to form an adherent thermoset film on the surface of the article.

18. The method of Claim 17 wherein the article is a metal container and the aqueous dispersion is applied to the interior surface of the metal container.

**Patentansprüche**

1. In Wasser quellbare, in Wasser dispergierbare polymere Mikrogel-Teilchen, gebildet aus einem vernetzten, in wäßriger Emulsion polymerisierten Copolymer, umfassend

(a) wenigstens ein relativ wasserunlösliches, von Carbonsäure-Gruppen freies, polymerisierbares Vinyl-Monomer,

(b) 10 bis 50%, bezogen auf das Gesamtgewicht der Monomeren, wenigstens eines polymerisierbaren, α,β-ethylenisch ungesättigten Carbonsäure-Monomers, wobei das wenigstens eine Carbonsäure-Monomer im wesentlichen nicht gelbildend ist, wenn mit dem wenigstens einen von Carbonsäure-Gruppen freien Monomer in wäßriger Emulsion copolymerisiert wird, und

(c) bis zu 5%, bezogen auf das Gesamtgewicht der Monomeren, eines difunktionellen vernetzenden Monomers.

2. Mikrogel-Teilchen nach Anspruch 1, dadurch gekennzeichnet, daß der Bestandteil (b) Methacrylsäure oder eine Mischung derstelben mit anderen α,β-ethylenisch ungesättigten Carbonsäuren ist, die beim Copolymerisieren mit den von Carbonsäure-Gruppen freien Monomeren in wäßriger Emulsion im wesentlichen nicht gelbildend sind, und der Bestandteil (a) wenigstens ein von Carbonsäure-Gruppen freies, polymerisierbares Vinyl-Monomer ist, das den Rest des Copolymerisationsprodukts bildet, wobei das von Carbonsäure-Gruppen freie, polymerisierbare Vinyl-Monomer aus polymerisierbaren vinylaromatischen Monomeren, Methacrylatester-Monomeren, Nitril-Monomeren, Vinylhalogenid-Monomeren, deren Mischungen und deren Mischungen mit kleineren Mengen Vinylester-Monomeren und Alkylacrylat-Monomeren ausgewählt ist.

3. Mikrogel-Teilchen nach Anspruch 2, dadurch gekennzeichnet, daß der Bestandteil (b) Methacrylsäure ist, der Bestandteil (c) Divinylbenzol ist und der Bestandteil (a) zu 10 bis 90%, bezogen auf das Gesamtgewicht der Monomeren, Styrol ist, das teilweise durch eine oder beide der folgenden Verbindungen ersetzt sein kann:

(d) 0 bis 50%, bezogen auf das Gesamtgewicht der Monomeren, Methylmethacrylat und

(e) 0 bis 10%, bezogen auf das Gesamtgewicht der Monomeren, Ethylacrylat, Vinylacetat oder eine Mischung derselben.

4. Mikrogel-Teilchen nach Anspruch 3, die das in wäßriger Emulsion gebildete Produkt der Additionspolymerisation von Methacrylsäure, Styrol, Vinylacetat und Divinylbenzol umfassen.

5. Mikrogel-Teilchen nach Anspruch 3, die das in wäßriger Emulsion gebildete Produkt der Additionspolymerisation von Methacrylsäure, Styrol, Ethylacrylat und Divinylbenzol umfassen.

6. Mikrogel-Teilchen nach Anspruch 3, die das in wäßriger Emulsion gebildete Produkt der Additionspolymerisation von Methacrylsäure, Styrol, Ethylacrylat, Methylmethacrylat und Divinylbenzol umfasen.

# 0 114 478

7. Mikrogel-Teilchen nach irgendeinem der Ansprüche 1 bis 6 in trockener Form.

8. Mikrogel-Zusammensetzung, umfassend Mikrogel-Teilchen nach irgendeinem der Ansprüche 1 bis 6 in wäßrigem Medium dispergiert.

9. Stabile wäßrige Dispersion eines organischen, wasserlöslichen filmbildenden Harzes, umfassend

(a) wenigstens ein in Wasser dispergierbares filmbildendes Harz gelöst in einem organischen, mit Wasser mischbaren Lösungsmittel,

(b) eine dispergierende Menge eines wäßrigen Lösungsmittel-Mediums und

(c) 10 bis 50%, bezogen auf das Gesamtgewicht der Feststoffe der Dispersion, eines Stabilisators zum Stabilisieren des filmbildenden Harzes in dem wäßrigen Lösungsmittel-Medium, wobei der Stabilisator die polymeren Mikrogel-Teilchen nach irgendeinem der Ansprüche 1 bis 7 umfaßt, in denen deren Säure-Gruppen wenigstens teilweise mit Ammoniak oder einem flüchtigen organischen Amin neutralisiert sind.

10. Wäßrige Dispersion nach Anspruch 9, dadurch gekennzeichnet, daß die Dispersion einen Feststoff-Gehalt von 15 bis 40 Gew.-% und einen Gehalt an organischem Lösungsmittel von weniger als 20 Gew.-% aufweist.

11. Wäßrige Dispersion nach Anspruch 10, dadurch gekennzeichnet, daß die Dispersion einen Feststoff-Gehalt von 20 bis 30 Gew.-% aufweist und das organische, mit Wasser mischbare Lösungsmittel in einer Menge vorliegt, die gerade ausreicht, um das organische filmbildende Harz aufzulösen.

12. Wäßrige Dispersion nach irgendeinem der Ansprüche 9 bis 11, dadurch gekennzeichnet, daß das organische filmbildende Harz 50 bis 90 Gew.-% und die Mikrogel-Teilchen 10 bis 50 Gew.-%, bezogen auf das Gesamtgewicht der Feststoffe der Dispersion, bilden.

13. Wäßrige Dispersion nach irgendeinem der Ansprüche 9 bis 12, dadurch gekennzeichnet, daß das organische filmbildende Harz ein in der Wärme vernetzbares, warmhärtendes Epoxy-Harz, Phenol-Harz, Polyester-Harz, Aminoplast-Harz oder eine Mischung irgendwelcher dieser Harze ist.

14. In der Wärme vernetzbare Beschichtungs-Zusammensetzung in Form der wäßrigen Dispersion nach irgendinem der Ansprüche 9 bis 12 unter Rückbezug auf Anspruch 4, dadurch gekennzeichnet, daß das filmbildende Harz wenigstens ein warmhärtendes, filmbildendes, aus Epoxy-Harzen, die einen Glycidyl-Polyether eines mehrwertigen Phenols oder hydrierten Phenols mit durchschittlich mehr als einer Epoxy-Gruppe im Molekül und mit einem Epoxy-Äquivalent-Gewicht von 150 bis 8000 umfassen, Phenol-Harzen und deren Mischungen ausgewähltes Harz ist, wobei die Zusammensetzung gegebenenfalls bis zu 10 Gew.-%, bezogen auf das Gesamtgewicht der Feststoffe der Dispersion, eines Aminoplast-Harzes enthält.

15. Verfahren zur Herstellung der wäßrigen Dispersion nach irgendeinem der Ansprüche 9 bis 14, umfassend die Schritte des

(a) Auflösens des in Wasser dispergierbaren, filmbildenden Harzes in dem mit Wasser mischbaren organischen Lösungsmittel zur Bildung einer Lösung des Harzes;

(b) getrennten Herstellens (wahlweise vor, während oder nach Schritt (a)) des Stabilisators für das filmbildende Harz durch Polymerisieren der entsprechenden Monomeren in wäßriger Emulsion zur Bildung der polymeren Mikrogel-Teilchen;

(c) Vermischens von 10 bis 50 Gew.%, bezogen auf das Gesamtgewicht der Feststoffe der Dispersion, der polymeren Mikrogel-Teilchen mit der Lösung des filmbildenden Harzes;

(d) wenigstens teilweisen Neutralisierens der Mischung mit Ammoniak oder einem flüchtigen organischen Amin; und

(e) Dispergierens der Mischung in einem wäßrigen Medium, um eine stabile wäßrige Harz-Dispersion bereitzustellen.

16. Verfahren nach Anspruch 15, umfassend den Schritt des Hinzufügens eines Aminoplast-Harzes zu der wäßrigen Harz-Dispersion nach dem Schritt (e).

17. Verfahren zum Schützen der Oberfläche eines Gegenstandes, umfassend das Aufbringen einer Beschichtung der wäßrigen Dispersion nach irgendeinem der Ansprüche 9 bis 14 oder hergestellt mittels des Verfahrens nach Anspruch 15 oder 16 auf die Oberfläche des Gegenstandes und das anschließende Erhitzen der Beschichtung zur Bildung eines haftenden, warmgehärteten Films auf der Oberfläche des Gegenstandes.

18. Verfahren nach Anspruch 17, dadurch gekennzeichnet, daß der Gegenstand ein Metall-Behälter ist und die wäßrige Dispersion auf die innere Oberfläche des Metall-Behälters aufgebracht wird.

**Revendications**

1. Particules de microgel gonflables dans l'eau, dispersibles dans l'eau formées d'un copolymère réticulé en émulsion aqueuse comprenant:

(a) au moins un monomère vinylique polymérisable relativement insoluble dans l'eau, exempt de groupe acide carboxylique,

(b) de 10 à 50%, en se basant sur le poids total des monomères, d'au moins un monomère d'acide carboxylique à insaturation α,β-éthylénique polymérisable, ledit au moins un monomère d'acide carboxylique étant sensiblement non gélifiant lorsqu'il est copolymérisé avec ledit au moins un monomère exempt de groupe acide dans une émulsion aqueuse; et

15

(c) jusqu'à 5%, en se basant sur le poids total des monomères, d'un monomère difonctionnel réticulant.

2. Particules de microgel de la revendication 1, où l'ingrédient (b) est l'acide méthacrylique ou son mélange avec d'autres acides carboxyliques à insaturation α,β-éthylénique qui, lorsqu'il est copolymérisé avec lesdits monomères exempts de groupe acide carboxylique dans une émulsion aqueuse, sont sensiblement non gélifiants; et l'ingrédient (a) est au moins un monomère vinylique polymérisable exempt de groupe acide carboxylique formant le reste dudit produit de copolymérisation, ledit monomère vinylique polymérisable exempt de groupe carboxylique étant choisi parmi des monomères vinyliques aromatiques, monomères d'ester de méthacrylate, monomères de nitrile, monomères d'halogénure de vinyle qui sont polymérisables, leurs mélanges et leurs mélanges avec des quantités mineures de monomères d'ester vinylique et de monomères d'acrylate d'alcoyle.

3. Particules de microgel de la revendication 2, où l'ingrédient (b) est l'acide méthacrylique; l'ingrédient (c) est le divinylbenzène; et l'ingrédient (a) est formé de 10 à 90%, en se basant sur le poids total des monomères, de styrène, qui peut être partiellement remplacé par l'un ou les deux suivants:

(d) de 0 à 50%, en se basant sur le poids total des monomères, de méthacrylate de méthyle; et

(e) de 0 à 10%, en se basant sur le poids total des monomères, d'acrylate d'éthyle, d'acétate de vinyle ou leur mélange.

4. Particules de microgel de la revendication 3, qui comprennent le produit de copolymérisation par addition, formé en une émulsion aqueuse, d'acide méthacrylique, styrène, acétate de vinyle et divinylbenzène.

5. Particules de microgel de la revendication 3, qui comprennent le produit de copolymérisation par addition, formé en une émulsion aqueuse, d'acide méthacrylique, styrène, acrylate d'éthyle et divinylbenzène.

6. Particules de microgel de la revendication 3, qui comprennent le produit de polymérisation par addition, formé en une émulsion aqueuse, d'acide méthacrylique, styrène, acrylate d'éthyle, méthacrylate de méthyle et divinylbenzène.

7. Particules de microgel selon l'une quelconque des revendications 1—6 sous forme sèche.

8. Composition en microgel comprenant des particules de microgel selon l'une des revendications 1—6 dispersées dans un milieu aqueux.

9. Dispersion aqueuse stable d'une résine organique, dispersible dans l'eau, filmogène comprenant:

(a) au moins une résine dispersible dans l'eau, filmogène, dissoute dans un solvant organique miscible dans l'eau;

(b) une quantité dispersante d'un milieu solvant aqueux; et

(c) de 10 à 50% en poids, en se basant sur le poids total des solides de la dispersion, d'un stabilisant pour stabiliser ladite résine filmogène dans ledit milieu solvant aqueux, ledit stabilisant comprenant les particules de microgel polymériques selon l'une quelconque des revendications 1—7 dont les groupes acides sont au moins partiellement neutralisés par le l'ammoniac ou une amine volatile organique.

10. Dispersion aqueuse de la revendication 9, où la dispersion a une teneur en solides de 15 à 40% et un teneur en solvant organique de moins de 20% en poids.

11. Dispersion aqueuse de la revendication 10, où la dispersion a une teneur en solides de 20 à 30% et le solvant organique miscible dans l'eau est présent en une quantité qui est juste suffisante pour dissoudre la résine organique filmogène.

12. Dispersion aqueuse selon l'une quelconque des revendications 9—11, où la résine organique filmogène forme 50 à 90% en poids et les particules de microgel forment 10 à 50% en poids, en se basant sur le poids total des solides de la dispersion.

13. Dispersion aqueuse selon l'une quelconque des revendications 9 à 12, où la résine organique filmogène est une résine époxy thermodurcissable, durcissable à la chaleur, une résine phénolique, une résine de polyester, une résine aminoplaste ou leur mélange.

14. Composition vulcanisable à la chaleur de revêtement sous la forme d'une dispersion aqueuse selon l'une quelconque des revendications 9 à 12 dépendant de la revendication 4, où la résine filmogène est au moins une résine filmogène thermodurcissable choisie parmi des résines époxy comprenant un glycidyl polyéther d'un phénol polyhydrique ou d'un phénol hydrogéné contenant en moyenne plus d'un groupe époxyde par molécule et ayant un poids équivalent époxy compris entre 150 et 8.000, des résines résoles phénoliques et leurs mélanges, la composition contenant facultativement jusqu'à 10% en poids, en se basant sur le poids total des solides de la dispersion, d'une résine d'aminoplaste.

15. Procédé de préparation de la dispersion aqueuse selon l'une quelconque des revendications 9—14, comprenant les étapes de:

(a) dissoudre la résine filmogène dispersible dans l'eau dans le solvant organique miscible dans l'eau pour former une solution de la résine,

(b) préparer séparément (soit avant, pendant ou après l'étape (a)) le stabilisant de la résine filmogène par polymérisation des monomères correspondants dans une émulsion aqueuse pour former les particules de microgel polymériques;

(c) mélanger 10 à 50% en poids, en se basant sur le poids total des solides de la dispersion, des particules du microgel polymériques à la solution de la résine filmogène;

(d) neutraliser au moins partiellement le mélange par le l'ammoniac ou une amine organique volatile; et

(e) disperser le mélange dans un milieu aqueux pour produire une dispersion stable aqueuse de résine.

16. Procédé de. la revendication 15, qui comprend l'étape d'ajouter une résine d'aminoplaste à la dispersion aqueuse de résine après l'étape (e).

17. Méthode de protection de la surface d'un article qui consiste à appliquer, à la surface de l'article, un revêtement de la dispersion aqueuse selon l'une quelconque des revendications 9—14 ou préparée par le procédé de la revendication 15 ou 16 puis à traiter thermiquement le revêtement pour former un film adhérent thermodurci à la surface de l'article.

18. Mèthode de la revendication 17, où l'article est un conteneur en métal et la dispersion aqueuse est appliquée à la surface intérieure du conteneur en métal.